# EUROPEAN PATENT APPLICATION

(11) **EP 4 848 489 A1**
(43) Date of publication of application: **02.12.2026**
(21) Application number: 26181068.3
(22) Date of filing: 26.05.2026
(51) Int. Cl.: H01R 13/453, B60L 53/16

(54) **WALL SOCKET FOR ELECTRIC VEHICLE CHARGING WITH LIVE CONTACTS PROTECTION DEVICE**

(30) Priority: 27.05.2025 IT 202500012205
(71) Applicant: Scame Parre S.p.A., 24020 Parre (BG) (IT); Zaptec IP AS, 4313 Sandnes (NO)
(72) Inventor: Fernandez Gomes, Marcos, Sandnes (NO); Laland, Jonatan, Harfsfjord (NO); Bettineschi, Maurizio, Vilminore di Scalve BG (IT)
(74) Representative: Concone, Emanuele

(57) **Abstract**

A wall socket for electric vehicles with a live contacts protection device comprises a front cover (1) and a main body in which there are arranged a plurality of cylindrical seats in some of which there are fitted metal sleeves acting as live contacts configured to receive corresponding pins of a plug, and further includes at least a pair of shutters (5, 5') movable, upon insertion of the plug into the socket through an opening (1a) in the front cover (1), between a working position in which they cover said live contacts and a rest position in which the live contacts can be reached by the plug, the shutters (5, 5') being formed at the end of respective arcuate arms (6, 6') rotatably mounted through horizontal pivots (7), said arcuate arms (6, 6') being crossed and vertically overlapping such that a bottom arm (6) is in contact with a top arm (6'), the rotation of the arms (6, 6') toward the rest position being driven by a cursor (11) acting on the top arm (6') and projecting into the opening (1a) with a top driving feature (11b) provided with a frontal oblique side such that a horizontal push of the plug results in a vertical push on the cursor (11).

## Description

The present invention relates to wall sockets for charging electric vehicles (EV), and in particular to a wall socket provided with a live contacts protection device that is automatically disengaged upon insertion of the corresponding plug.

It is known that the market offers sockets and wall sockets, both for industrial and domestic use, provided with a contacts protection device to increase the safety level for the user so that the latter cannot accidentally come into contact with live parts. Such a device usually consists of a shutter arranged within the socket body, in the space below the holes for the entrance of the pins, which is biased by a spring to cover the live contacts and is moved by the corresponding plug, with a translational or rotational motion, to gain access to the contacts (see e.g. EP 1376772).

A socket for electric vehicles manufactured according to the IEC 62196-2 standard (Standard Sheet 2-IIa, also known as "Type 2") is however designed such that it is not possible to apply the above-illustrated usual protection device. In fact, inside the socket body there is no space suitable to house the shutter since the corresponding plug was designed so that it substantially takes up the whole space inside the socket body. When unmated to its corresponding plug , the reference standard for EV charging systems (EN IEC 61851-1) states that an IPxxB protection degree could be enough when it comes to live parts.

DE 10-2009-044343 and DE 10-2010-048713, which describe substantially the same device, disclose a socket for electric vehicles (also according to the above-mentioned standard) which is provided with a closure unit arranged before the socket body so as to overcome the lack of space inside the latter. In other words, such a socket is merely like a prior art socket with a contacts protection device that has been moved forward outside of the socket body.

In fact, the closure unit shown in these documents essentially consists of a pear-shaped cover element made up of two halves pivoted at the top so as to move away from each other, and thus grant access to the entrance of the socket body located behind them, when they are pushed aside by the plug against the resistance of a spring. Such a closure unit is also suitable for retrofitting existing power outlets and clearly increases the length and bulkiness of the socket.

EP 2685568 discloses a socket for electric vehicles (also according to the above-mentioned standard) provided with a pair of covers arranged substantially outside the socket body and comprising terminal shutter portions that penetrate the socket body to cover the live contacts, said covers being moved from said working position, to which they are biased by elastic members, to a rest position, in which their terminal shutter portions are outside the socket body, by at least one actuating member projecting inside the socket body and suitable to be moved outside the socket body by the corresponding plug upon insertion of the latter into the socket. Such an arrangement is however unsuitable for a wall socket that is exposed to atmospheric agents, because the body openings that allow the covers to reach their working position also allow the entry of dirt and moisture that can jeopardize the proper operation of the socket. Furthermore, in case of failure of the live contacts protection device the whole socket should be replaced, which is a costly and labor-intensive process.

A very similar socket is disclosed in CN 108988002, which in practice differs only in that the socket body is larger and houses the covers both in the working position and in the rest position. This prevents the entry of dirt and moisture but makes the socket body very bulky, and does not solve the problem of socket replacement in case of failure of the live contacts protection device.

WO 2023/192024 describes a different configuration of the covers and their moving mechanism according to the preamble of claim 1, which represents an improvement with respect to this prior art socket in the following aspects:
a) Safety - the arcuate arms carrying the shutters in WO 2023/192024 are locked in the working position merely by frictional engagement of the front cover through end bosses formed on said arcuate arms; this means that the disengagement of the arms is caused simply by the vertical push on the arms provided by a slider that is pushed down by the plug that enters the socket, whereby the device can easily be opened with one action by a user pushing down on the slider. In the present invention, on the contrary, the live contacts protection device includes a mechanism for locking the shutters in the working position, said mechanism comprising a disengagement portion projecting into the socket opening so as to be moved outside the opening by the plug upon insertion of the latter into the socket and to unlock the shutters; this means that the opening of the device requires two separate actions, first the disengagement of the arms and then their rotation through the slider, thus making it more difficult to tamper with the socket.
b) Reliability and smoothness of operation - the arcuate arms in WO 2023/192024 are rotated to the open position only by the action of the slider pushed down by the plug, and this pushing action must also overcome the above-mentioned frictional engagement and the resistance of the springs arranged to return the arms to the closed position upon removal of the plug; moreover, the downwards movement of the slider results in an applied force to the first and second shutter arms as a result of contact between bosses formed thereon next to the respective pivot points and corresponding bosses at the bottom corner ends of the slider, with a very short distance that provides little torque. This means that the whole mechanism undergoes a significant stress at every plug insertion and that the user must apply an adequate push on the plug to provide the required force on the slider, resulting also in the possibility of damaging the electric terminals of the socket if the strong push on the plug is maintained after the frictional engagement is overcome. In the present invention, on the contrary, there is no need for such a strong push on the plug because the arms are disengaged by the locking mechanism upon insertion of the plug, and the rotation of the arms is assisted by pre-loaded springs so that the whole opening of the device is smoother and the components of the device are less stressed resulting in greater reliability.
c) Bulkiness - the arcuate arms in WO 2023/192024 are arranged side by side, not in the same vertical plane, and they engage only through central enmeshing teethed portions that are horizontally offset with respect to the arcuate portions carrying the shutters; moreover, since the slider drives the arms into rotation through the bosses at its bottom corner ends, the arms must extend below the slider. All these features result in a significant bulkiness of the device in height, width and depth. In the present invention, on the contrary, the arms are vertically overlapping such that a bottom arm is in contact with a top arm, and their arcuate shapes are configured to maintain said contact during the rotation of the arms that is driven by the slider acting only on either the top arm (open) or bottom arm (close). This results in a more compact device in all three dimensions.
d) Convenience - the two arcuate arms in WO 2023/192024 are mounted respectively on a front cover and a back cover that form a housing that contains the live contacts protection device and is secured to the socket body through the back cover (or the latter is integrated with the socket body); this means that if the protection device fails and needs replacement the socket cannot be used until it is replaced or, if the broken device is removed, the socket remains unprotected with its terminals exposed. In the present invention, on the contrary, the casing containing the live contacts protection device is mounted on a socket's own front cover, whereby in case of device failure it is sufficient to remove the broken device and the socket can still be used until a replacement is possible, since the terminals are not exposed.

Therefore, the object of the present invention is to provide a wall socket for electric vehicles of the above-mentioned type which overcomes the drawbacks of the prior art. This object is achieved by means of a wall socket according to claim 1, while other preferable features are recited in the dependent claims.

The main advantage of the wall socket according to the present invention is that of achieving the function of live contacts protection with a compact and sealed structure capable of withstanding repeated operations with high reliability and constant smoothness.

A second advantage of the wall socket in question stems from the fact that the protection device is preferably mounted on a front cover of the socket main body through a casing, whereby in case of failure it can be easily replaced with a minimum cost and labor without requiring to replace the whole socket and allowing for continued use of the socket even in case of failure of the protection device.

Another advantage of this wall socket resides in the presence of a mechanism for locking the protection device which prevents the latter from being easily moved away from the working position when the corresponding plug is not inserted, so as to further increase the safety.

These and other advantages and characteristics of the wall socket according to the present invention will be clear to those skilled in the art from the following detailed description of an embodiment thereof, with reference to the annexed drawings wherein:
Fig.1 is a front perspective view of the wall socket;
Fig.2 is a view similar to the preceding one with the front cover removed from the main body;
Fig.3 is a front view of the protection device in the working position;
Figs.4-6 are rear perspective views of the protection device in the working position, at an intermediate position and in the rest position, respectively; and
Fig.7 is a front perspective view of a detail of the wall socket ready to receive the plug.

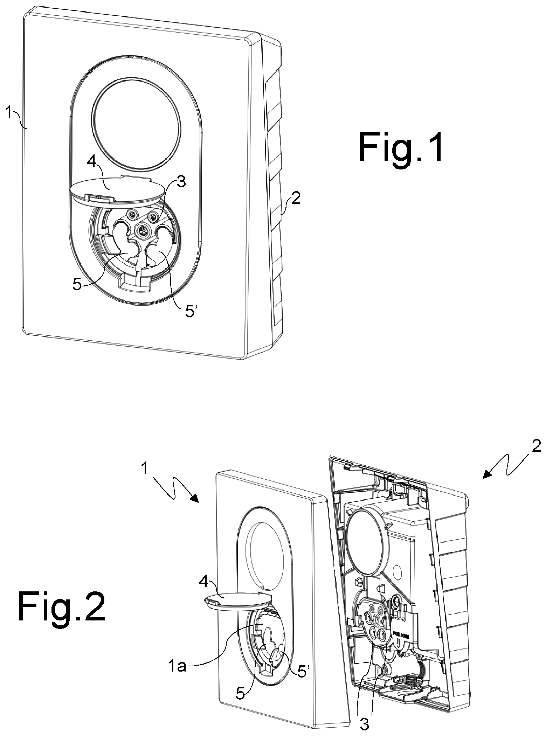

With reference to figures 1 and 2, there is seen that a wall socket according to the present invention includes a front cover 1 mounted on a main body 2 which holds all the electronics for the operation of the socket and seven cylindrical seats 3, four of which are defined "live seats" since they are fitted with metal sleeves acting as live contacts in which the corresponding live pins of a plug (not shown) are inserted. Access to seats 3 is possible through an opening 1a in cover 1 that is closed by a hinged lid 4, typically spring-biased to its closed position, so as to prevent the entry of dirt and moisture into the main body 2.

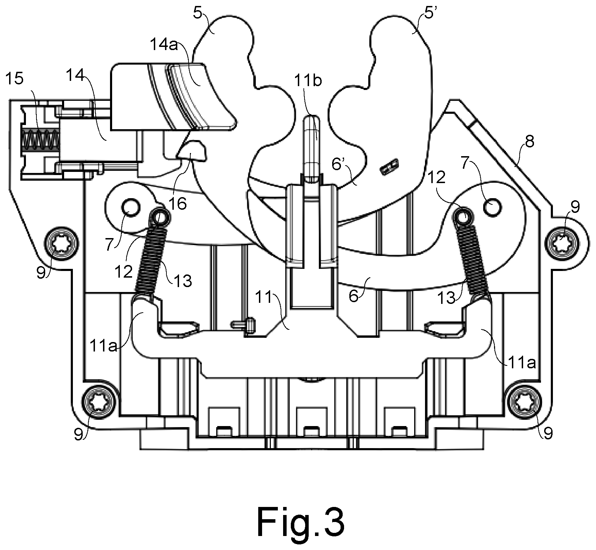

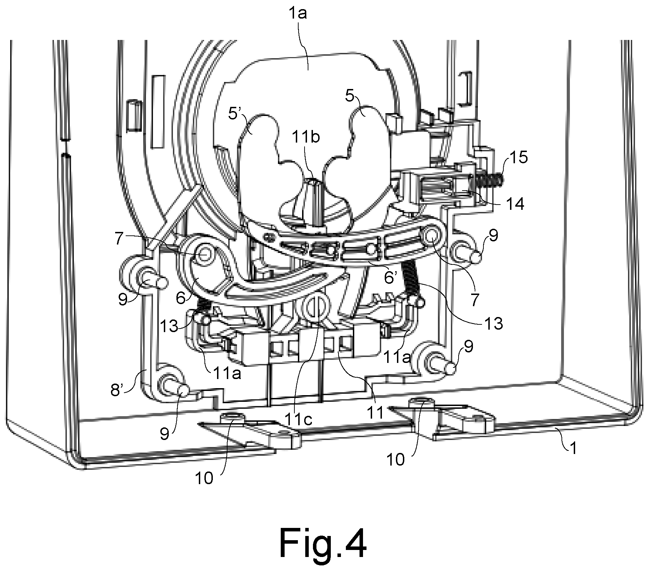

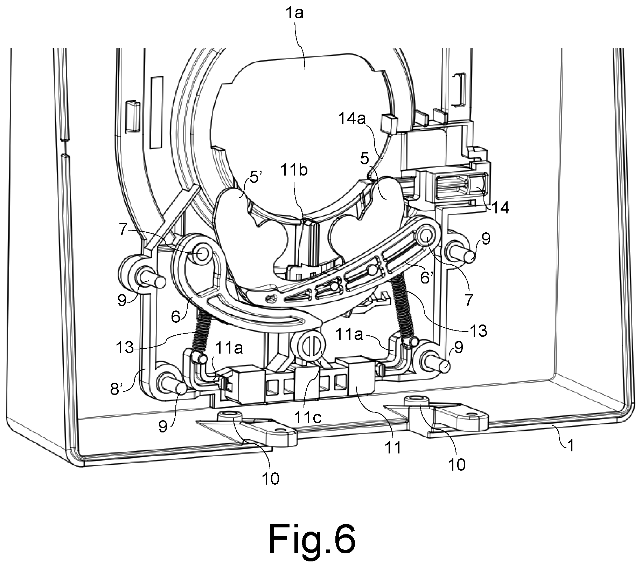

On each lateral pair of live seats 3 there is a shutter 5, 5' that is movable, as detailed in the following, between a working or closed position (shown in Figs.1-4) in which it covers the live seats 3 so as to prevent access thereto, and a rest or open position (shown in Fig.6) in which the plug can be inserted in the socket. As clearly shown in figures 3 and 4, a first novel aspect of the present wall socket is that each shutter 5, 5' is integrally formed at the end of a corresponding arcuate arm 6, 6' that is rotatably mounted through a horizontal pivot 7 on a back plate 8 (omitted in Figs.4-6), which is secured through screws 9 to a front plate 8' (omitted in Fig.3) and through other screws, or other reversible fastening means, to two seats 10 formed on the inside of the front cover 1.

In other words, the two plates 8, 8' form a casing that encloses the live contacts protection device, while allowing the shutters to move out of and into said casing, and is screwed onto the front cover 1 so that upon failure of the live contacts protection device it can be easily replaced without affecting the other components of the wall socket. Obviously, the live contacts protection device could also be mounted directly on the front cover 1, dispensing with the plates that form the casing, but in that case the whole front cover 1 should be replaced in case of failure of the live contacts protection device, which is still way better than replacing the whole wall socket since all the most expensive components remain on the main body 2.

The two arcuate arms 6, 6' are crossed and vertically overlapping such that the bottom arm 6 is in contact with the top arm 6' at a position close to the vertical midplane of the live contacts protection device, and their arcuate shapes are configured to maintain such contact during the rotation of arms 6, 6' while allowing for shutters 5, 5' to move freely away from and toward opening 1a. This arrangement allows for a very compact live contacts protection device that can be fully contained within the wall socket and can even be mounted as an aftermarket upgrade on existing sockets.

The rotation of arms 6, 6' around pivots 7 is caused by an actuating member that, in the preferred embodiment illustrated in the drawings, consists of a cursor 11 that slides vertically . Cursor 11 preferably has a pair of L-shaped side projections 11a connected to arms 6, 6' through traction springs 13 that help the downward rotation of the arms, being connected to pegs 12 formed on the arms 6, 6' at positions located sufficiently internally with respect to pivots 7 (i.e., closer to the vertical midplane of the live contacts protection device) to provide a substantial opening torque. Cursor 11 is provided as well with a top driving feature 11b and a bottom driving feature 11c that are preferably vertically aligned and extend horizontally so as to contact arms 6' and 6 respectively.

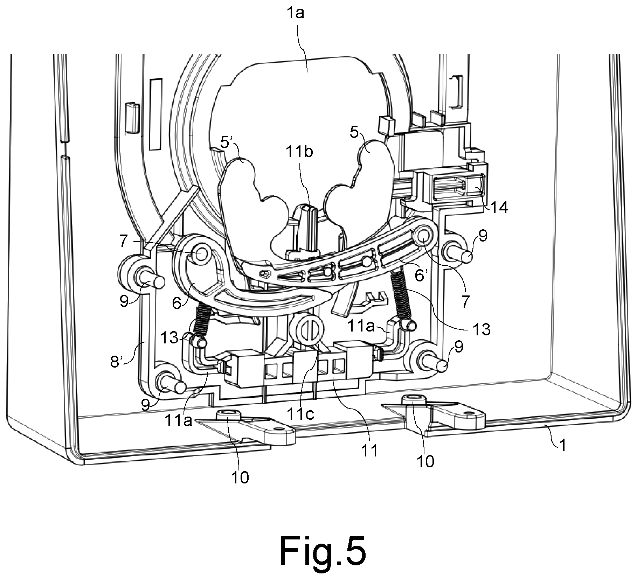

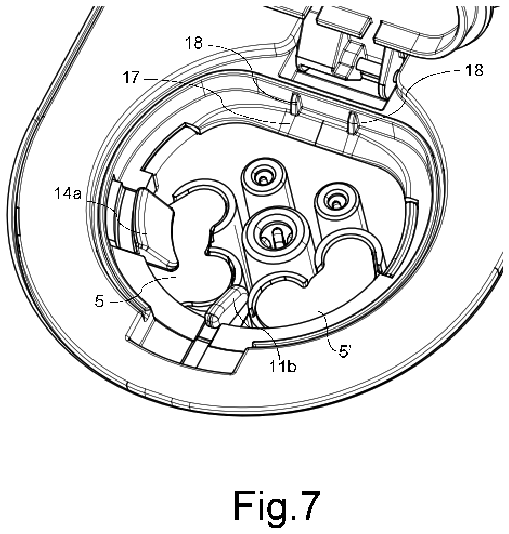

More specifically, the top driving feature 11b is substantially shaped as a vertical right trapezoid with horizontal bases with the shorter base at the top, such that the oblique lateral side faces outward (best seen in Figs.5, 7). In this way, when the plug approaches the socket it comes first in contact with the front oblique side of feature 11b such that the horizontal push of the plug results in a vertical push on cursor 11 that slides downward, as mentioned above and better described in the following.

The bottom driving feature 11c is a simple circular peg but it could have other shapes since its purpose is merely that of acting on arm 6 during the closing movement driven by the traction springs 13 upon removal of the plug, when cursor 11 is free to slide upwards under the pull of the traction springs 13, the upward travel of cursor 11 being limited by an end stop, preferably formed on the front plate 8'. The distance from the top feature 11b to the bottom feature 11c is such that the two arms 6, 6' are received therebetween with a small play when in the working position of Fig.4.

Therefore, when the contact protection device is in its working position illustrated in figures 1 to 4, the left shutter 5 covers the two live seats 3 on the left of the socket and the right shutter 5' covers the two live seats 3 on the right of the socket.

A second novel aspect of the socket according to the present invention is given by the presence of a mechanism for locking the protection device which prevents the latter from moving away from the working position in a safer way than what is provided in the prior art. In fact, although the shutter mechanism is enclosed by the casing formed by plates 8 and 8', shutters 5 and 5' are accessible through opening 1a when the plug is not inserted. The presence of a specific locking mechanism allows therefore to further increase the safety of the socket and to meet the requirements of the standards of the sector.

This locking mechanism preferably comprises a horizontal latch 14 slidingly mounted on the back plate 8 and pushed by a bias spring 15 into engagement with a tooth 16 formed on the bottom arm 6 so as to prevent its downward rotation, and therefore also the rotation of the top arm 6'. More specifically, latch 14 has a slanted terminal portion 14a that projects into opening 1a over the left shutter 5, the inclination of said terminal portion 14a being similar to the inclination of the top driving feature 11b (i.e., with a ramp climbing radially outwards from opening 1a) such that the push of the plug approaching the socket results in a horizontal push on latch 14 that slides to the left against the resistance of the bias spring 15.

Preferably, a similar ramp 17 climbing radially outwards is also formed along the top edge of opening 1a, as shown in Fig.7. Two slanted ridges 18 are also formed on said ramp 17 and cooperate therewith to guide the plug towards the center of the socket during its insertion through opening 1a so to achieve a smoother operation.

In the light of the description above, and of figures 5 and 6, the simple and effective operation of the wall socket according to the present invention is readily understood.

As soon as the plug starts to be inserted in the front cover 1 through opening 1a, its bottom edge comes into contact with the inclined side of the top driving feature 11b which projects inside opening 1a between shutters 5, 5' (Figs.1-4). This contact, as mentioned above, causes cursor 11 to slide downwards as much as allowed by the play between feature 11b and the top arm 6', while pre-loading the traction springs 13.

Proceeding with the insertion, the plug comes into contact with the slanted terminal portion 14a of latch 14 that starts to slide to the left, as mentioned above, thus disengaging from tooth 16 and consequently allowing arms 6, 6' to rotate around pivots 7 under the push of the top driving feature 11b (Fig.5), until latch 14, shutters 5, 5' and feature 11b have cleared opening 1a (Fig.6). It should be noted that the traction springs 13 help the downward rotation of arms 6, 6' such that shutters 5, 5' are moved away from the live seats 3 before the entering plug has the chance to come into contact with the shutters, thus achieving a smooth operation of the protection device.

The reverse movement from the rest position of the protection device illustrated in Fig.6 to the working position illustrated in Figs.1-4, as mentioned above, is also provided by the traction springs 13 that pull cursor 11 upward as soon as the plug is pulled out of the socket, said pull being transmitted by the bottom driving feature 11c to the bottom arm 6, which in turn pushes the top arm 6'. At the same time, the bias spring 15 pushes latch 14 back into engagement with tooth 16, thus locking the protection device in the working position.

It is clear that the above-described and illustrated embodiment of the wall socket according to the invention is just an example susceptible of various modifications. In particular, the specific arrangement of the left/right shutters 5, 5' can be reversed in a mirror-like way, with the left shutter formed on the top arm and the right shutter formed on the bottom arm. Furthermore, each shutter covering a pair of live seats 3 could be divided into two singular shutters each covering only one live seat 3, both singular shutters being formed on the same arm.

Similarly, the locking elements 14, 15, 16 could be arranged on the right side of the device, with tooth 16 being formed either on the top arm or on the bottom arm, since in both cases the rotation of the arms would be prevented by the interaction of the locked arm with the other arm or cursor 11.

Finally, it is noted that all the definitions left/right, top/bottom, upward/downward and horizontal/vertical provided above are not meant to be limiting since they refer to the specific example shown in the drawings but the wall socket could be mounted and operated with any orientation.

## Claims

1. A wall socket for electric vehicles comprising a front cover (1) and a main body (2) in which there are arranged a plurality of cylindrical seats (3) in some of which there are fitted metal sleeves acting as live contacts configured to receive corresponding pins of a plug, said wall socket further including a live contacts protection device with at least a pair of shutters (5, 5') formed on respective crossed arcuate arms (6, 6') that are rotatably mounted through horizontal pivots (7) so as to be movable, upon insertion of the plug into the socket through an opening (1a) in said front cover (1), between a working position, to which said shutters (5, 5') are biased by elastic members and in which they cover said live contacts, and a rest position in which the live contacts can be reached by said corresponding pins of the plug, said movement from the working position to the rest position being driven by an actuating member projecting into the opening (1a) with a frontal oblique side such that a horizontal push of the plug results in a vertical push on said actuating member, said wall socket being **characterized in that** said arcuate arms (6, 6') are vertically overlapping such that a bottom arm (6) is in contact with a top arm (6') at a position close to the vertical midplane of the live contacts protection device, **and in that** their arcuate shapes are configured to maintain said contact during the rotation of the arms (6, 6') while allowing for the shutters (5, 5') to move freely away from and toward said opening (1a), **and in that** the live contacts protection device further includes a mechanism for locking the shutters (5, 5') in the working position, said mechanism comprising at least one disengagement portion projecting into the opening (1a) so as to be moved outside the opening (1a) by the plug upon insertion of the latter into the wall socket and to unlock the shutters (5, 5') prior to the plug coming into contact with them.

2. A wall socket for electric vehicles according to claim 1, **characterized in that** the actuating member is a cursor (11) that slides vertically and is connected to the arcuate arms (6, 6') through traction springs (13) that are connected to pegs (12) formed on the arcuate arms (6, 6') at positions located internally with respect to the horizontal pivots (7), and said cursor (11) also has a top driving feature (11b) and a bottom driving feature (11c) that extend horizontally so as to contact the top arm (6') and the bottom arm (6) respectively.

3. A wall socket for electric vehicles according to claim 2, **characterized in that** the distance from the top driving feature (11b) to the bottom driving feature (11c) is such that the two arcuate arms (6, 6') are received therebetween with a small play when in the working position.

4. A wall socket for electric vehicles according to any of the preceding claims, **characterized in that** the mechanism for locking the shutters (5, 5') comprises a sliding horizontal latch (14) pushed by a bias spring (15) into engagement with a tooth (16) formed on one of the arcuate arms (6, 6') so as to prevent its downward rotation, said latch (14) having a slanted terminal portion (14a) that acts as disengagement portion.

5. A wall socket for electric vehicles according to any of the preceding claims, **characterized in that** the live contacts protection device is mounted on the front cover (1) through a casing.

6. A wall socket for electric vehicles according to the preceding claim, **characterized in that** the casing containing the live contacts protection device is formed by a back plate (8) which is secured to a front plate (8'), and said casing is secured through screws or other reversible fastening means to seats (10) formed on the inside of the front cover (1).

7. A wall socket for electric vehicles according to any of the preceding claims, **characterized in that** a ramp (17) climbing radially outwards is formed along the top edge of the opening (1a), two slanted ridges (18) being also preferably formed on said ramp (17) so as to cooperate therewith to guide the plug towards the center of the socket during its insertion.
